# EUROPEAN PATENT SPECIFICATION

(11) **EP 1 041 699 B1**
(45) Date of publication and mention of the grant of the patent: **22.02.2006**
(21) Application number: 00200844.9
(22) Date of filing: 10.03.2000
(51) Int. Cl.: H02K 5/20, H02K 9/19

(54) **Electric motor or generator**
Elektromotor oder -Generator
Moteur ou générateur électrique

(30) Priority: 01.04.1999 GB 9907511
(43) Date of publication of application: 04.10.2000
(73) Proprietor: Delphi Technologies, Inc., Troy, MI 48007 (US)
(72) Inventor: Waters, Paul, 6791 Athus (BE); Kneppers, Gerard, 7762 Bissen (LU); Read, Donald, Bergen, 14416 New York (US)
(74) Representative: Denton, Michael John

(56) References cited:
- EP-A- 0 631 365
- EP-A- 0 878 897
- EP-A- 0 899 852
- GB-A- 1 028 315
- US-A- 4 516 044
- US-A- 4 818 906
- US-A- 5 798 587

## Description

### Technical Field

The present invention relates to an electric motor or generator, such as an alternator, having fluid cooling passages formed in the housing of the electric motor or generator.

### Background of the Invention

Electric motors or generators having a stator secured within the housing of the motor or generator are well known. A rotor coil mounted on a shaft is positioned within the stator and is rotatable relative to the stator about the longitudinal axis of the shaft. Liquid cooling is provided for the motor or generator by passing fluid, such as water, through passages formed in the housing (which is substantially cup-shaped) in order to provide cooling for the stator. The fluid passes through the housing by way of two separate passages formed in the housing. One of the passages passes through the outer wall to provide cooling for the stator. The other passage passes through the end wall to provide cooling for the electronic components mounted on the housing and for a bearing for the shaft mounted in the end wall. A single inlet on the housing connects with the two passages, and a single outlet also connects with the two passages. EP-A-0231785 describes such a known arrangement. In this arrangement, the fluid flow at the inlet is split between the two passages and has a short flow path through the housing. Such an arrangement restricts the efficiency of heat transfer to the cooling fluid.

EP-A-0878897 describes an improvement to the arrangement shown in EP-A-0231785. In EP-A-0878897, the flow passages are integrally formed in the end wall and the outer wall of the housing and are connected to define a single fluid flow path through the housing. The fluid passage in the end wall has a smaller cross-sectional area than the fluid passage in the outer wall. Flow directing ribs are positioned in the fluid passage in outer wall. Such an arrangement can create surges in, or stalling of, cooling fluid velocity (for example, where the fluid flows from the small cross-sectional area to the large cross-sectional area), and air pockets in the fluid flowing through the housing, which can restrict the efficiency of heat transfer to the cooling fluid.

US-A-4516044 discloses an electric motor with coolant flow passages in the casing, with the passages being separated by a member for a portion of their circumferential length.

### Summary of the Invention

It is an object of the present invention to provide an electric motor or generator having improved cooling compared to the arrangements described above.

An electric motor or generator in accordance with the present invention is characterised over EP-A-0878897 by the features specified in the characterising portion of claim 1.

The sequential flow path defined by the flow passage in the end wall and the first and second passages in the outer wall provides an increased flow path length for the cooling fluid as it passes through the housing when compared to previously known arrangements. Such an arrangement provides improved cooling for the stator, for the bearing, and for any electronic components mounted on the housing; furthermore it reduces the risk of the formation of air pockets. Further embodiments of the present invention improve the cooling of the bearing and provide for easier manufacture of the housing.

### Brief Description of the Drawings

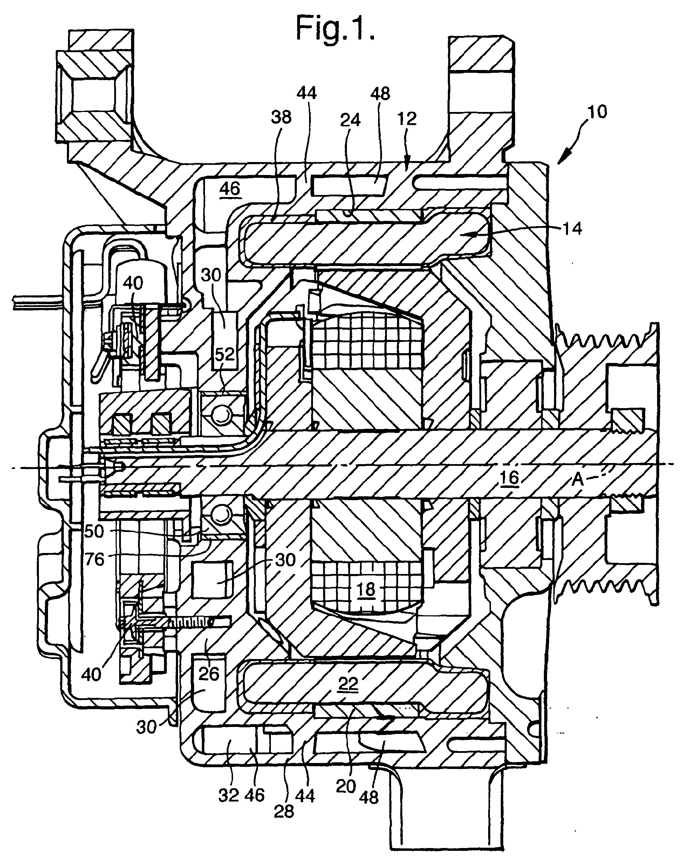

The present invention will now be described, by way of example, with reference to the accompanying drawings, in which:-
Figure 1 is a cross-sectional view of an electric motor or generator in accordance with the present invention; and
Figures 2 and 3 are perspective views of the fluid flow passages in the housing of the electric motor or generator of Figure 1.

### Description of the Preferred Embodiment

Referring to the drawings, the embodiment of electric motor or generator in accordance with the present invention is an alternator 10. The alternator 10 comprises a housing 12, a stator 14, a shaft 16, and a rotor coil 18. The stator 14 is substantially annular and comprises a number of stator laminations 20 with a coil 22 wound around and through the laminations. The housing 12 has an annular inner surface 24 against which the stator 14 makes a tight fit. The housing 12 is substantially cup-shaped and comprises an end wall 26 and an annular outer wall 28. A fluid flow passage 30 is formed through the end wall 26, and a fluid flow passage 32 is formed through the outer wall 28. A fluid inlet 34 and a fluid outlet 36 are formed on the housing 12. The stator 14 is preferably impregnated with a thermally conductive epoxy resin 38 after the stator has been positioned in the housing 12, with the epoxy resin substantially filling every gap between the stator coil 22, the laminations 20, and the housing 12. The epoxy resin 38 enhances the thermal conductivity between the stator 14 and the cooling fluid in the flow passage 32 in the outer wall 28 of the housing 12. The rotor coil 18 is mounted on the shaft 16 and positioned inside the stator 14. The shaft 16 has a longitudinal axis A and is rotatable about its axis relative to the housing 12 and the stator 14. A bearing 50 is mounted in an aperture 52 in the end wall 26 of the housing 12. The bearing 50 rotatably supports the shaft 16 where the shaft extends through the end wall 26. The bearing 50 is cooled by the cooling fluid passing through the flow passage 30 in the end wall 26 of the housing 12. Electronic components 40, such as a rectifier and voltage regulator, are mounted on the end wall 26 of the housing 12 and are cooled by the cooling fluid passing through the flow passage 30 in the end wall 26 of the housing 12. The alternator 10 as thus far described is well known and other features of the alternator which are well known to those skilled in the art will not be described in further detail.

The flow passages 30,32 are integrally formed in the end wall 26 and the outer wall 28 of the housing 12 during formation of the housing. The flow passages 30,32 are connected together, and the inlet 34 is connected to only one 30 of the flow passages, and the outlet 36 is only connected to the other flow passage 32. As a consequence, the flow passages 30,32 are connected to form a single fluid flow path through the housing 12 from the inlet 34 to the outlet 36, and the flow of cooling fluid through the flow passages 30,32 is by way of this single path.

Still further, the flow passage 32 in the outer wall 28 of the housing 12 is defined by a first passage 46 and a second passage 48. The first passage 46 and the second passage 48 extend circumferentially through the outer wall 28 and are separated, in the longitudinal direction, by a member 44 formed internally in the outer wall. The first and second passages 46,48 extend around the outer wall 28 for substantially the whole circumferential length of the outer wall. One end 54 of the first passage 46 is fluidly connected to one end 56 of the flow passage 30 in the end wall 26. The other end 58 of the first passage 46 is fluidly connected to one end 60 of the second passage 48 by a passage 78 which extends substantially longitudinally. The other end 62 of the second passage 48 is fluidly connected to the outlet 36. The other end 64 of the flow passage 30 in the end wall 26 is fluidly connected to the inlet 34.

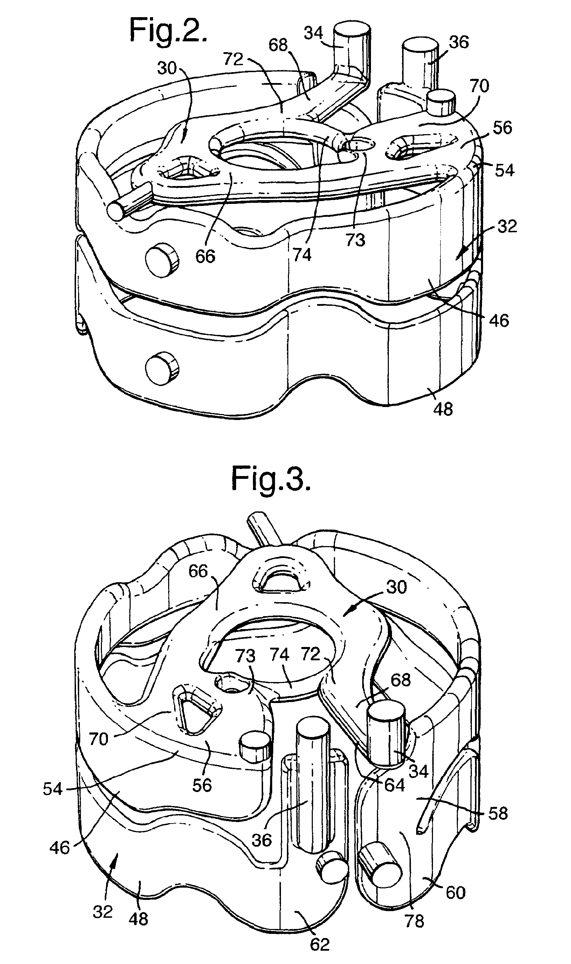

As shown in Figures 2 and 3, the first and second passages 46,48 are fluidly connected in such a way that fluid flows through the first passage 46 in one rotational direction about the axis A, and then flows through the second passage 48 in the opposite rotational direction about the axis A. Alternatively, the first and second passages may be fluidly connected such that fluid flow is in the same rotational direction through the first and second passages, in which case passage 78 would extend substantially circumferentially.

With this arrangement, the cross-sectional areas of the flow passage 30 in the end wall 26, of the first passage 46 in the outer wall 28, and of the second passage 48 in the outer wall, can be formed to be substantially the same throughout the length of the passages. Such an arrangement reduces the possibility of surges in the cooling fluid velocity, and of air pockets forming in the cooling fluid. The member 44 preferably undulates to further reduce the risk of air pocket formation, and removes the need for flow directing ribs in the first and second passages 46,48.

The flow passage 30 in the end wall 26 is preferably defined by an annular portion 66 which circumferentially surrounds the aperture 52 in the end wall 26 in which the bearing 50 is mounted. The annular portion 66 is fluidly connected to the inlet 34 by a first radially extending arm 68, and fluidly connected to the first passage 46 in the outer wall 28 by a second radially extending arm 70. The radially outer end of the first arm 68 defines the other end 64 of the flow passage 30, and the radially outer end of the second arm 70 defines the one end 56 of the flow passage 30. The radially inner ends 72,73 of the first and second arms 68,70, respectively, are preferably positioned substantially adjacent one another with a small arcuate part 74 of the annular portion 66 therebetween. With this arrangement, cooling fluid can flow through the annular portion 66 around the entire circumferential outer surface 76 of the bearing 50 to provide improved cooling for the bearing. Further, the arcuate part 74 of the annular portion 66 restricts relative movement of the first and second arms 66,68 to substantially limit thermal expansion and contraction of the aperture 52 in the end wall 26.

The arrangement of the flow passages 30,32 of the present invention is such that the inlet 34 and the outlet 36 can be formed to extend away from the housing 12 in any desired direction without interfering with the flow passages.

The housing 12 with the integrally formed flow passages 30,32 may be formed by any suitable method, but is preferably formed by casting using the lost-foam process, or by sand casting, with the inlet 34 and the outlet 36 preferably also being integrally formed with the housing. The arrangement of the flow passages 30,32 allows the use of gravity for media flow during the moulding process.

The sequential flow path defined by the flow passage 30, the first passage 46, and the second passage 48 provides an increased flow path (up to substantially 1080 degrees) for the cooling fluid as it passes through the housing 12, with reduced risk of air pocket formation. Such an arrangement provides improved cooling for the stator 14, the bearing 50, and any electronic components 40 mounted on the housing 12.

## Claims

1. An electric motor or generator (10) comprising a housing (12) which is substantially cup-shaped and having an end wall (26) and an annular outer wall (28), a fluid flow passage (30) being formed through the end wall, and a fluid flow passage (32) being formed through the outer wall; an inlet (34) connecting with one (30) of the flow passages; an outlet (36) connecting with the other (32) of the flow passages; a stator (14) fixedly secured within the housing; a shaft (16) having a longitudinal axis (A), extending into the housing, and rotatable about the longitudinal axis relative to the housing and the stator; a bearing (50) mounted in an aperture (52) in the end wall and rotatably supporting the shaft; and a rotor coil (18) mounted on the shaft and positioned within the stator; and wherein the flow passage (30) in the end wall (26) and the flow passage (32) in the outer wall (28) are integrally formed in the end wall and the outer wall respectively and are sequentially connected to define a flow path through the housing between the inlet and the outlet; **characterised in that** the flow passage (32) in the outer wall (28) comprises a first passage (46) and a second passage (48), the first passage and the second passage extending circumferentially through the outer wall and being separated, in the longitudinal direction, for a portion of their circumferential length, by a member (44) formed internally in the outer wall; and **in that** the flow passage (30) in the end wall (26), the first passage (46) in the outer wall (28), and the second passage (48) in the outer wall have substantially the same cross-sectional area.

2. An electric motor or generator as claimed in Claim 1, wherein the first and second passages (46,48) are connected such that fluid flow in the first passage is in one direction about the longitudinal axis (A) and fluid flow in the second passage is in the reverse direction about the longitudinal axis.

3. An electric motor or generator as claimed in Claim 1 or Claim 2, wherein the first and second passages (46.48) each extend around the outer wall (28) for substantially the whole circumferential length of the outer wall.

4. An electric motor or generator as claimed in any one of Claims 1 to 3, wherein the member (44) separating the first and second passages (46,48) in the outer wall (28) of the housing (12) has an undulating configuration.

5. An electric motor or generator as claimed in any one of Claims 1 to 4, wherein the flow passage (30) in the end wall (26) comprises an annular portion (66) which circumferentially surrounds the aperture (52) in the end wall in which the bearing (50) is mounted; a first radially extending arm (68) fluidly connected to the annular portion at the radially inner end (72) thereof; and a second radially extending arm (70) fluidly connected to the annular portion at the radially inner end (73) thereof.

6. An electric motor or generator as claimed in Claim 5, wherein the radially inner ends (72,73) of the first and second arms (68,70) are positioned substantially adjacent one another with a small arcuate part (74) of the annular portion (66) therebetween.

## Patentansprüche

1. Elektromotor oder Generator (10), der umfasst: ein Gehäuse (12), das im Wesentlichen schalenförmig ist und eine Stirnwand (26) und eine kreisringförmige Außenwand (28) aufweist, wobei ein Fluidströmungskanal (30) durch die Stirnwand hindurch gebildet ist und ein Fluidströmungskanal (32) durch die Außenwand hindurch gebildet ist; einen Einlass (34), der mit einem (30) der Strömungskanäle verbunden ist; einen Auslass (36), der mit dem anderen (32) der Strömungskanäle verbunden ist; einen Stator (14), der fest innerhalb des Gehäuses gesichert ist; eine Welle (16) mit einer Längsachse (A), die sich in das Gehäuse hinein erstreckt und um die Längsachse herum relativ zu dem Gehäuse und dem Stator drehbar ist; ein Lager (50), das in einer Öffnung (52) in der Stirnwand befestigt ist und die Welle drehbar lagert; und eine Rotorspule (18), die an der Welle befestigt und innerhalb des Stators angeordnet ist; und wobei der Strömungskanal (30) in der Stirnwand (26) und der Strömungskanal (32) in der Außenwand (28) einteilig in der Stirnwand bzw. der Außenwand gebildet sind und hintereinander geschaltet sind, um einen Strömungsweg durch das Gehäuse hindurch zwischen dem Einlass und dem Auslass zu definieren; **dadurch gekennzeichnet, dass** der Strömungskanal (32) in der Außenwand (28) einen ersten Kanal (46) und einen zweiten Kanal (48) umfasst, wobei der erste Kanal und der zweite Kanal sich in Umfangsrichtung durch die Außenwand erstrecken und durch ein innen in der Außenwand gebildetes Element (44) in der Längsrichtung für einen Abschnitt ihrer Länge in Umfangsrichtung getrennt sind; und dass der Strömungskanal (30) in der Stirnwand (26), der erste Kanal (46) in der Außenwand (28) und der zweite Kanal (48) in der Außenwand im Wesentlichen die gleiche Querschnittsfläche aufweisen.

2. Elektromotor oder Generator nach Anspruch 1, wobei der erste und der zweite Kanal (46, 48) derart verbunden sind, dass eine Fluidströmung in dem ersten Kanal in einer Richtung um die Längsachse (A) herum vorhanden ist und eine Fluidströmung in dem zweiten Kanal in der umgekehrten Richtung um die Längsachse herum vorhanden ist.

3. Elektromotor oder Generator nach Anspruch 1 oder 2, wobei der erste und der zweite Kanal (46, 48) sich jeweils um die Außenwand (28) herum über im Wesentlichen die gesamte Länge in Umfangsrichtung der Außenwand herum erstrecken.

4. Elektromotor oder Generator nach einem der Ansprüche 1 bis 3, wobei das Element (44), das den ersten und den zweiten Kanal (46,48) in der Außenwand (28) des Gehäuses (12) trennt, eine wellenförmigen Aufbau aufweist.

5. Elektromotor oder Generator nach einem der Ansprüche 1 bis 4, wobei der Strömungskanal (30) in der Stirnwand (26) umfasst: einen kreisringförmigen Abschnitt (66), der die Öffnung (52) in der Stirnwand, in der das Lager (50) befestigt ist, in Umfangsrichtung umgibt; einen ersten sich radial erstreckenden Arm (68), der mit dem kreisringförmigen Abschnitt an seinem radial inneren Ende (72) fluidmäßig verbunden ist; und einen zweiten, sich radial erstreckenden Arm (70), der mit dem kreisringförmigen Abschnitt an seinem radial inneren Ende (73) fluidmäßig verbunden ist.

6. Elektromotor oder Generator nach Anspruch 5, wobei die radial inneren Enden (72, 73) des ersten und des zweiten Armes (68, 70) im Wesentlichen benachbart zueinander mit einem kleinen bogenförmigen Teil (74) des kreisringförmigen Abschnitts (66) dazwischen angeordnet sind.

## Revendications

1. Moteur ou générateur électrique (10) comprenant un carter (12) qui est sensiblement en creux et ayant une paroi d'extrémité (26) et une paroi extérieure annulaire (28), un passage de circulation de fluide (30) étant formé à travers la paroi d'extrémité, et un passage de circulation de fluide (32) étant formé à travers la paroi extérieure; une entrée (34) se connectant à un (30) des passages de circulation ; une sortie (36) se connectant à l'autre (32) des passages de circulation; un stator (14) assujetti de manière fixe à l'intérieur du carter ; un arbre (16) ayant un axe longitudinal (A), se prolongeant dans le carter, et tournant autour de l'axe longitudinal par rapport au carter et au stator ; un palier (50) monté dans une ouverture (52) dans la paroi d'extrémité et portant l'arbre en rotation ; et une bobine de rotor (18) montée sur l'arbre et positionnée à l'intérieur du stator ; et dans lequel le passage de circulation (30) dans la paroi d'extrémité (26) et le passage de circulation (32) dans la paroi extérieure (28) sont intégralement formés dans la paroi d'extrémité et dans la paroi extérieure respectivement et sont séquentiellement connectés afin de définir un trajet de circulation à travers le carter entre l'entrée et la sortie ; **caractérisé en ce que** le passage de circulation (32) dans la paroi intérieure (28) comprend un premier passage (46) et un deuxième passage (48), le premier passage et le deuxième passage se prolongeant à la périphérie à travers la paroi extérieure et étant séparés dans la direction longitudinale, sur une partie de leur longueur périphérique, par un élément (44) formé à l'intérieur de la paroi extérieure ; et **en ce que** le passage de circulation (30) dans la paroi d'extrémité (26), le premier passage (46) dans la paroi extérieure (28), et le deuxième passage (48) dans la paroi extérieure ont sensiblement la même section en coupe transversale .

2. Moteur ou générateur électrique selon la revendication 1, dans lequel le premier et le deuxième passages (46, 48) sont connectés de sorte que la circulation de fluide dans le premier passage se fasse dans un premier sens suivant l'axe longitudinal (A) et la circulation de fluide dans le deuxième passage se fasse dans le sens inverse suivant l'axe longitudinal.

3. Moteur ou générateur électrique selon la revendication 1 ou la revendication 2, dans lequel les premier et deuxième passages (46, 48) se prolongent chacun autour de la paroi extérieure (28) sur sensiblement toute la longueur périphérique de la paroi extérieure.

4. Moteur ou générateur électrique selon l'une quelconque des revendications 1 à 3, dans lequel l'élément (44) séparant les premier et deuxième passages (46, 48) dans la paroi extérieure (28) du carter (12) présente une configuration en ondulation.

5. Moteur ou générateur électrique selon l'une quelconque des revendications 1 à 4, dans lequel le passage de circulation (30) dans la paroi d'extrémité (26) comprend une partie annulaire (66) qui entoure en périphérie l'ouverture (52) dans la paroi d'extrémité dans laquelle le palier (50) est monté ; une première branche se prolongeant selon le rayon (68) connectée par fluide à la partie annulaire au niveau de l'extrémité intérieure selon le rayon (72) de celle-ci ; et une deuxième branche se prolongeant selon le rayon (70) connectée par fluide à la partie annulaire au niveau de l'extrémité intérieure selon le rayon (73) de celle-ci.

6. Moteur ou générateur électrique selon la revendication 5, dans lequel les extrémités intérieures selon le rayon (72, 73) des première et deuxième branches (68, 70) sont positionnées sensiblement au voisinage l'une de l'autre avec une petite partie courbe (74) de la partie annulaire (66) entre elles.
